# FASCICULE DE BREVET EUROPEEN

(11) **EP 3 618 947 B1**
(45) Date de publication et mention de la délivrance du brevet: **24.08.2022**
(21) Numéro de dépôt: 18720253.6
(22) Date de dépôt: 26.04.2018
(51) Int. Cl.: B01J 8/18, B01J 8/26, B01J 8/08, B01J 8/44, B01J 4/00, B01J 8/00

(54) **NOUVEAU DISPOSITIF DE DISTRIBUTION DE MÉLANGE POLYPHASIQUE DANS UNE ENCEINTE COMPORTANT UN MILIEU FLUIDISE**
NEUE VORRICHTUNG ZUM VERTEILEN EINES POLYPHASENGEMISCHES IN EINER KAMMER MIT EINEM FLUIDISIERTEN MEDIUM
NOVEL DEVICE FOR DISTRIBUTING A POLYPHASE MIXTURE IN A CHAMBER COMPRISING A FLUIDISED MEDIUM

(30) Priorité: 05.05.2017 FR 1754006
(43) Date de publication de la demande: 11.03.2020
(73) Titulaire: IFP Energies nouvelles, 92852 Rueil-Malmaison (FR)
(72) Inventeur: TEBIANIAN, Sina, 69003 Lyon (FR); AMBLARD, Benjamin, 69007 Lyon (FR); GAUTHIER, Thierry, 69530 Brignais (FR)
(86) Numéro de dépôt international: PCT/EP2018/060799
(87) Numéro de publication internationale: WO 2018/202554

(56) Documents cités:
- EP-A1- 2 813 283
- WO-A1-96/08676
- CN-A- 103 240 038
- CN-A- 104 923 131
- CN-A- 105 080 438
- US-A- 4 787 791

## Description

### CONTEXTE DE L'INVENTION

L'invention s'inscrit dans l'amélioration du design des distributeurs pour la distribution d'une phase légère dans une phase dense. Généralement la phase légère est une phase gaz et la phase dense une phase liquide, mais plus généralement, dans le contexte des lits fluidisés, la phase légère est une phase gaz, une phase gaz -solide, ou une phase liquide, et la phase dense est le lit fluidisé lui-même, c'est-à-dire l'émulsion de particules solides dispersées dans le gaz ou le liquide.

Dans le cas où le réacteur est un lit fluidisé, qui contient une phase solide (catalytique ou non), maintenue en suspension à l'état de pseudo fluide par le passage d'un fluide gazeux, liquide, d'un mélange de fluides gaz et liquide, ou d'un pseudo-fluide constitué de gaz ou de liquide contenant des particules en suspension, la distribution a pour rôle essentiel de maintenir la fluidisation du solide dans le réacteur.

Il est donc capital d'assurer une bonne distribution des phases fluides à leur entrée dans le réacteur.

Le chapitre 6 de l'ouvrage "Handbook of Fluidization and Fluid-Particle Systems" (ed. Yang 2003) donne des exemples des différents types de distributeurs utilisés dans les systèmes polyphasiques.

À titre d'exemple, le brevet US4760779 reporte un distributeur de type plaque à trou utilisé pour alimenter les lits fluidisés. Les documents US2841476 et US3672577 donnent des exemples de distributeurs équipés avec des cloches protectives montées au-dessus de chaque trou pour éviter un retour de solide et briser les jets. Le brevet CN105080438A reporte un dispositif de distribution d'une phase légère au sein d'une phase lourde dans une enceinte pour un lit fluidisé, comportant une conduite cylindrique d'amenée de la phase légère pénétrant dans la partie inférieure de l'enceinte, avec fenêtres rectangulaires dans la paroi latérale de la conduite surmontée à sa partie supérieure d'un pommeau convexe qui présente des encoches.

L'objet de la présente invention est de décrire un système permettant de distribuer une phase fluide légère dans une enceinte réactionnelle contenant une phase fluide ou un solide fluidisé, caractérisé par une densité plus lourde que la phase légère à distribuer. Ce système permet non seulement de casser la vitesse à proximité de l'introduction de la phase légère, mais également de distribuer sur l'ensemble de la section du réacteur la phase légère.

Plus précisément, Le système selon l'invention est composé d'une canalisation permettant de transporter la phase fluide légère dans le réacteur. A l'extrémité de cette canalisation, des déflecteurs sont disposés pour distribuer la phase fluide légère à différentes positions radiales dans le réacteur.

L'invention est particulièrement adaptée à la distribution d'une phase légère (gaz ou gaz/liquide) dans un réacteur en lit fluidisé bouillonnant triphasique dans lequel le catalyseur est fluidisé par un mélange de fluides réactifs constitué d'un gaz et d'un liquide.

L'invention peut être utilisée pour distribuer la phase légère dans le liquide en amont d'un distributeur constitué d'un système à plaque perforée. L'invention est particulièrement bien adaptée lorsque le fluide léger est de l'hydrogène, et quand le fluide lourd est un résidu pétrolier, pour une mise en œuvre dans un réacteur d'hydroconversion en lit bouillonnant constitué d'un réacteur fluidisé triphasique.

L'invention est également particulièrement adaptée pour distribuer une phase gaz-solide ou gaz-liquide à haute température dans un réacteur à lit fluidisé. C'est le cas de la régénération étagée de catalyseur dans le procédé R2R ou le catalyseur subit une première étape de combustion dans un réacteur en lit fluidisé, puis une seconde étape de régénération en lit fluidisé également, lit fluidisé dans lequel le catalyseur doit être distribué de façon homogène sur l'ensemble de la section du deuxième étage de régénération, pour favoriser les réactions de combustion et limiter les différences de température.

Plus généralement, le dispositif selon l'invention peut être utilisé de façon non limitative dans les réacteurs suivants :
- réacteurs de procédés FCC (craquage catalytique en lit fluidisé),
- réacteurs de régénération de catalyseurs, par exemple de craquage catalytique,
- réacteurs comprenant un lit fluidise de catalyseurs,
- réacteurs d'hydrotraitement ou d'hydrocraquage fonctionnant en écoulement ascendant avec une entrée d'un flux diphasique gaz/liquide ou gaz/solide dans le fond de l'enceinte,
- réacteurs de type « slurry »,
- stripeurs, sécheurs, aérateurs ou humidificateurs,
- réacteurs de pyrolyse catalytique.

### DESCRIPTION SOMMAIRE DES FIGURES

La figure 1 est une vue de profil du dispositif de distribution polyphasique selon l'invention. Elle permet de distinguer les fenêtres (7) et (8), le pommeau (9) et le tube d'amenée (2).
La figure 2a représente plus en détail une vue de profil du distributeur avec en particulier les dimensions E, F et H.
La figure 2b représente une vue de dessous du distributeur qui permet de visualiser les branches (6) se prolongeant à partir des fenêtres (8), ainsi que les encoches (10).
La figure 2c est une vue de dessous du distributeur selon l'invention qui permet de bien comprendre comment sont organisées les branches (6), ainsi que l'alternance des fenêtres (7) et (8). Les dimensions A, B, C, D sont introduites sur cette figure.
La figure 2d est une vue de profil du distributeur qui permet de visualiser la hauteur K des fenêtres (8) et la hauteur L des branches (6).
La figure 3 est une visualisation issue de simulations 3D qui permet de suivre la dispersion du fluide introduit dans l'enceinte au moyen d'un distributeur selon l'art antérieur.
La figure 4 est une visualisation issue de simulations 3D qui permet de suivre la dispersion du fluide introduit dans l'enceinte (5) au moyen d'un distributeur selon la présente invention.

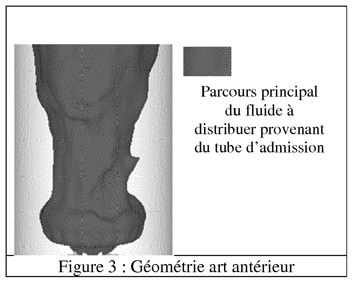

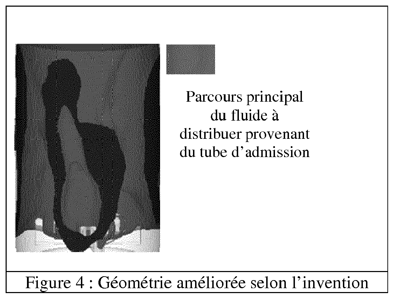

Les figures 3 et 4 servent à illustrer l'exemple comparatif donné à la fin du texte.

### EXAMEN DE L'ART ANTERIEUR

L'art antérieur dans le domaine des distributeurs en milieu polyphasique est assez riche et nous retiendrons comme art antérieur le plus proche les deux documents suivants :
- le Brevet US 5,571,482 décrit le contrôle de la température dans un régénérateur de FCC grâce à un dispositif d'échange de chaleur en lit fluidisé appelé « cat cooler ». Ce brevet mentionne brièvement un distributeur de type champignon en haut du riser dans le régénérateur (colonne 6 / ligne 40) sans en préciser les dimensions.
- le Brevet FR 3,006,607 décrit un distributeur de type « champignon » applicable aux procédés H-oil et FCC. Ce brevet revendique une distribution d'une phase légère dans une phase dense (gaz dans liquide ou gaz dans un lit fluidisé) dans lequel on retrouve un moyen d'acheminement du fluide à introduire, un couvercle (5) ayant un corps principal (6) en forme de cloche, et un moyen de déflexion (14) configuré pour diriger le fluide vers la périphérie du couvercle (5). Les dimensions des principaux éléments sont précisées. Le dispositif selon l'invention améliore significativement la distribution de la phase légère dans le réacteur par rapport au dispositif décrit dans le brevet FR 3,006,607.

### DESCRIPTION SOMMAIRE DE L'INVENTION

La présente invention peut se définir comme un dispositif de distribution d'une phase légère au sein d'une phase lourde dans une enceinte réactionnelle (5) contenant la dite phase lourde à l'état fluidisé.

La phase légère peut être un gaz, une suspension gaz-solide ou un liquide, et la phase lourde fluidisée une émulsion gaz solide ou même un milieu triphasique gaz solide liquide, comme cela se rencontre dans les procédés d'hydrotraitement de coupes pétrolières.

Le dispositif de distribution selon l'invention comporte une conduite (1) d'amenée de la phase légère pénétrant à l'intérieur de l'enceinte réactionnelle (5) dans sa partie inférieure, ladite conduite (1) étant cylindrique et sensiblement centrée selon l'axe de symétrie de l'enceinte (5), et étant ouverte dans sa partie supérieure par des premières et deuxièmes fenêtres rectangulaires (7, 8) percées dans la paroi latérale de ladite conduite (1).

Les fenêtres (7) s'ouvrent directement dans le milieu fluidisé de l'enceinte réactionnelle (5), tandis que les deuxièmes fenêtres (8) se prolongent par des branches (6) perpendiculaires à l'axe de symétrie de l'enceinte (5) permettant d'atteindre la périphérie de l'enceinte (5).

La conduite (1) est surmontée à sa partie supérieure d'un pommeau convexe (9) qui présente des encoches (10) régulièrement réparties tout au long de son bord inférieur, et laisse passer les branches (6) qui débordent au-delà de la circonférence dudit pommeau (9). Les premières fenêtres rectangulaires (7) ont une largeur B et une hauteur J, soit une section de passage B*J, et les deuxièmes fenêtres rectangulaires (8) ont une largeur A et une hauteur K, soit une section de passage A*K, déterminées de telle manière que la vitesse v de la phase légère au passage des premières et deuxièmes fenêtres soit comprise entre 0,3V et 20V, et préférentiellement comprise entre 0,5V et 10V, V désignant la vitesse de ladite phase légère dans la conduite (1). Cette vitesse V est comprise entre 1 m/s et 100 m/s et préférentiellement comprise entre 3 m/s et 30 m/s.

Les premières et deuxièmes fenêtres (7, 8) sont disposées de manière alternée et sont de préférence en nombre pairs en total et de même nombre.

Le diamètre I du pommeau (9) est généralement compris entre 0,05 G et 0, 95 G, de préférence compris entre 0,2 G et 0,8 G, et de manière encore préférée, compris entre 0,25 G et 0,75 G, G désignant le diamètre intérieur de l'enceinte réactionnelle (5), G désignant le diamètre intérieur de l'enceinte réactionnelle (5).

La longueur D des branches (6) prises depuis le centre O du dispositif, coïncidant avec l'axe de symétrie de l'enceinte réactionnelle (5), jusqu'à leur extrémité de sortie est comprise entre 0,55 I et 0,48G, et la hauteur L des branches (6) à leur extrémité de sortie est comprise entre 1 et 10 K.

Les encoches (10) sont généralement de forme triangulaire ou rectangulaire ;
Lorsque les encoches (10) sont rectangulaires, leur largeur est comprise entre 0,01F et 0,9F, et leur hauteur est comprise entre 0,01F et 0,9F.

Lorsque les encoches (10) sont triangulaires, la hauteur du triangle est comprise entre 0,01F et 0,9F et la base du triangle est comprise entre 0,01F et 0,9F.

Le pommeau (9) est généralement muni d'orifices (11) sur sa cloche supérieure, lesdits orifices (11) ayant un diamètre compris entre 1 et 100 mm, préférentiellement compris entre 10 et 50 mm.

Dans le cadre du procédé de craquage catalytique à deux étages de régénération, le dispositif selon l'invention peut être utilisé pour effectuer le passage du catalyseur de la première zone de régénération à la deuxième zone de régénération en lit fluidisé turbulent. Dans le cadre d'un procédé de traitement de la biomasse, le dispositif selon l'invention peut être utilisé pour réaliser l'introduction d'une phase gaz, ou d'une suspension gaz solide dans le milieu fluidisé du réacteur de traitement de la biomasse.

Dans le cadre d'un procédé d'hydrotraitement de coupes pétrolières lourdes, le dispositif selon l'invention peut être utilisé pour réaliser l'introduction de l'hydrogène dans le milieu fluidisé contenant les particules de catalyseur et la phase hydrocarbure lourde à traiter.

Plus généralement, le dispositif de distribution selon l'invention peut être utilisé dans :
l es réacteurs de procédé de craquage catalytique en lit fluidisé (noté FCC en abrégé),
l es réacteurs de régénération de catalyseurs, par exemple de craquage catalytique (FCC),
l es réacteurs comprenant un lit fluidisé de catalyseurs,
l es réacteurs d'hydrotraitement ou d'hydrocraquage fonctionnant en écoulement ascendant avec une entrée d'un flux diphasique gaz/liquide ou gaz/solide dans le fond de l'enceinte,
l es réacteurs de type « slurry »,
l es stripeurs, sécheurs, aérateurs ou humidificateurs,
l es réacteurs de pyrolyse catalytique.

### DESCRIPTION DETAILLEE DE L'INVENTION

La présente invention concerne un dispositif de distribution d'un fluide monophasique ou diphasique dans un milieu fluidisé monophasique ou polyphasique de densité apparente plus élevée que celle du fluide à distribuer. La phase fluide légère est soit un gaz, soit un liquide, soit une suspension gaz-solide ou gaz-liquide, soit une suspension liquide solide caractérisée par le fait que la masse volumique de la suspension est inférieure à la masse volumique dans l'enceinte réactionnelle. Dans la suite du texte on parlera de façon abrégée de phase légère à distribuer.

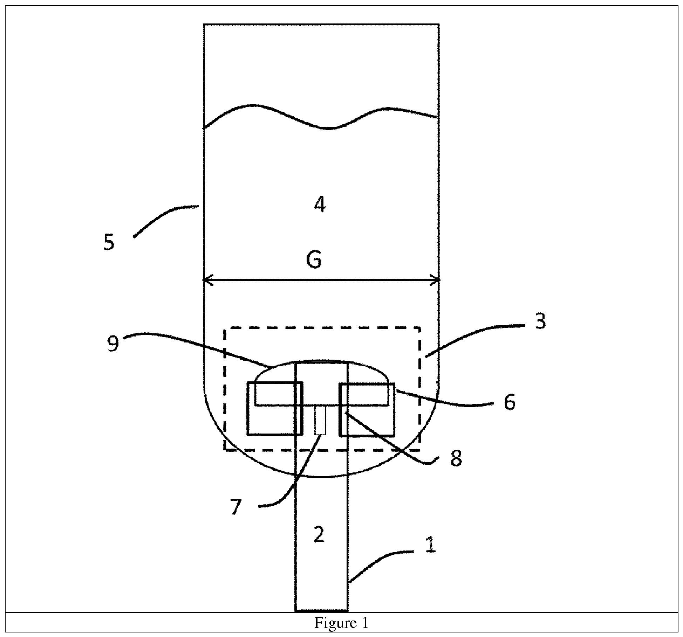

La figure 1 ci-dessous présente la configuration du dispositif selon l'invention. Il s'agit d'une enceinte (5) qui peut par exemple être celle d'un réacteur ou d'un régénérateur équipé d'un dispositif de distribution.

Un tube (1) permet d'amener une phase fluide légère 2 dans une enceinte réactionnelle (5) contenant une phase fluide dense 4.

Le tube (1) est préférentiellement vertical s'il transporte un écoulement multiphasique.

De manière préférentielle, la partie finale du tube 1 est disposée coaxialement avec l'enceinte réactionnelle (5).

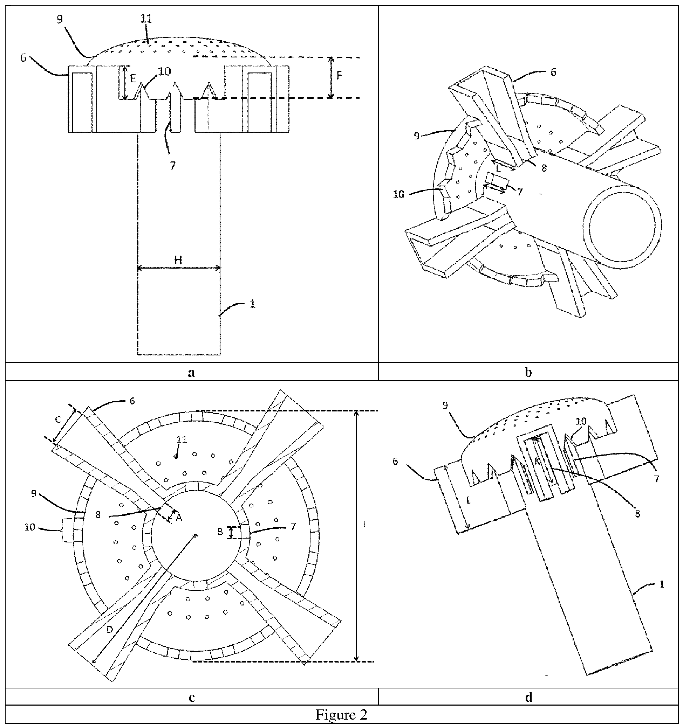

L'introduction du fluide 2 dans l'enceinte (5) se fait grâce à un distributeur (3) représenté grossièrement sur la figure 1 et de manière plus détaillée sur la figure 2.

Le dispositif de distribution (3) est placé à l'extrémité supérieure de la conduite (1). Le fluide 2 est introduit dans l'enceinte 5 à travers deux types de fenêtres (7) et (8).
- les fenêtres de type 7 ont une largeur B et une hauteur J,
- les fenêtres de type 8 ont une largeur A et une hauteur K.

Les fenêtres de type 8 sont connectées à des branches 6 de longueur D dont l'extrémité a une largeur C.

Un brise-jet constitué d'un pommeau (9) est disposé au sommet de la canalisation (1) pour mieux distribuer le fluide 2 introduit à travers les fenêtres (7) dans la partie centrale de l'enceinte (5) en passant à travers les orifices (11) disposés sur le sommet du pommeau (9), ou à travers les encoches (10) disposées dans les parois latérales de ce pommeau.

Pour permettre au fluide 2 d'atteindre la partie périphérique située autour du pommeau (9), des branches (6) dont l'ouverture correspond aux fenêtres (8), canalisent le fluide passant dans les fenêtres (8). Ces branches (6) distribuent le fluide 2 dans la zone annulaire par leurs extrémités de sortie de largeur C.

Le fluide 2 dans la conduite 1 a une vitesse notée V.

Dans le cas d'un gaz, la vitesse V est comprise entre 1 et 100 m/s, et de manière préférée comprise entre 3 et 30 m/s.

Dans le cas d'une suspension gaz solide, la vitesse du gaz est comprise entre 3 et 30 m/s et de manière préférée comprise entre 6 et 25 m/s et le flux de solides transporté est compris entre 5 et 1000 kg/s/m²,preferentiellement compris entre 50 et 600 kg/s/m².

Le nombre total de fenêtre (7) et (8) est préférentiellement pair et sera compris entre 2 et 48, de préférence entre 4 et 24, et de manière préférée entre 8 et 12.

Les fenêtres (8) sont connectées aux branches (6). Le nombre de fenêtre de type (8) peut représenter entre 10% et 80% du nombre total de fenêtres, de préférence entre 40% et 60% du nombre total de fenêtres, et de manière préférée 50% du nombre total de fenêtres.

Les dimensions des fenêtres de type 7 (B,J) et de type 8 (A,K) sont choisies pour avoir une vitesse de fluide 2 dans les fenêtres comprises entre 0,3V et 20V, et de manière préférée entre 0,5V et 10V et préférentiellement égale à V.

De manière préférée, le nombre de fenêtres de type (7) est égal au nombre de fenêtres du type (8), et les fenêtres sont alternées régulièrement à la périphérie du tube 1.

Les dimensions des largeurs de fenêtre de type 7 (B,J) peuvent être différentes des dimensions des fenêtres de type 8 (A,K). Les surfaces des fenêtres de type (7) et de type( 8) sont proportionnelles à la répartition volumique du fluide 2 souhaitées entre ces deux types de fenêtres. Ainsi, si le pommeau (9) couvre la moitié de la section de passage du réacteur (5), alors le débit passant par les fenêtres de type (7) alimentant la section couverte par le pommeau (9) sera égal au débit passant par les fenêtres (8) et les branches (6) alimentant la section périphérique. Avec un même nombre de fenêtres (7) et (8), il est possible d'avoir des dimensions similaires pour les deux types de fenêtres.

Le diamètre I du pommeau (9) est compris entre 0,05 G et 0,95 G, de préférence entre 0,2 G et 0,8G, et de manière préférée entre 0,65 G et 0,75 G. Le design des trous (11), des encoches (10) et de la hauteur du pommeau (9) se font selon le document FR 3 006 607.

La paroi supérieure des branches (6) est préférentiellement horizontale. La section inférieure des branches (6) est préférentiellement ouverte pour éviter les phénomènes du saltation pour les écoulement gaz/solide.

Les parois latérales ont une hauteur L comprise entre 1 et 10 K, de préférence entre 1 et 7 K, et de manière préférée entre 1,2 et 3 K. Pour assurer que le fluide 2 passe principalement par l'extrémité des branches (6), il est préférable que l'énergie cinétique nécessaire pour parcourir la branche soit égale ou inférieure à l'énergie potentielle nécessaire pour que le fluide 2 s'écoule par les parois latérales des branches:

| | |
|---|---|
| *ρ₄gL* ≥*1*/*2 ρ₂v²* | *(a)* |

v étant la vitesse du fluide dans la fenêtre 8, *ρ₄* étant la densité de la phase fluide dense notée 4, et *ρ₂* la densité de la phase fluide à distribuer notée 2.

La section de passage constituée par la branche peut être constante ou variable.

L'extrémité des branches (6) a une largeur C comprise entre 0,1 et 10 A, de préférence entre 0,5 et 7 A, et de manière préférée entre 1 et 5 A, A étant la largeur à l'entrée des fenêtres de type 8.

La longueur E est comprise entre 0 et F, de préférence entre 0,1 et 0,9 F, et de manière préférée entre 0,2 et 0,7 F, F étant la hauteur de la partie inférieure du pommeau (9).

E étant la distance entre la section supérieure des branches et la base des encoches (10), et F étant la hauteur de la partie inférieure du pommeau (9), c'est-à-dire plus précisément la hauteur de la partie du pommeau qui ne contient pas de perforations telles que (11).

Le dispositif de distribution selon la présente invention peut être complété par une couronne de distribution située au-dessus ou en dessous du distributeur (3) pour l'introduction du gaz supplémentaire selon les besoins du procédé. De manière préférée, ladite couronne, lorsqu'elle existe, est positionnée sous la partie la plus basse des ouvertures (7) et (8) pour favoriser le mélange.

### EXEMPLES SELON L'INVENTION

Les deux exemples ci-dessous correspondent à un cas selon l'art antérieur et à un cas selon la présente invention.

Le fluide 2 correspondant à la phase légère se distribue dans un milieu fluidisé plus dense contenu dans l'enceinte réactionnelle.

Des simulations CFD en 3 dimensions selon l'art antérieur d'une part, et selon l'invention d'autre part, ont été effectuées et sont visualisées respectivement au moyen des figures 3 et 4.

Le tableau 1 ci-dessous présente les conditions opératoires et les dimensions des distributeurs selon l'art antérieur et selon l'invention. Les valeurs particulières sont celles utilisées dans l'exemple.

**Tableau 1 : dimensions du dispositif selon l'art antérieur et selon l'invention**

| CONDITIONS OPÉRATOIRES | |
|---|---|
| Diamètre conduite d'admission 1 (m) | 0,1 à 3 en particulier 2 |
| Diamètre enceinte 5 (m) | 1 à 15 en particulier 7,5 |
| | |
| Densité du fluide 2 à distribuer (kg/m³) | 0,5 à 250 en particulier 20 |
| Densité du milieu ambiant 4 (kg/m³) | 250 à 1000 en particulier 500 |

| DIMENSIONS DISTRIBUTEUR ART ANTERIEUR | |
|---|---|
| Diamètre pommeau 9 (m) | 0,7 à 10 en particulier 4 |
| Nombre de fenêtres total | 4 à 12 en particulier 8 |
| Nombre de trous 11 | 100 à 500 en particulier 160 |
| Diamètre trous 11 (mm) | 20-100 en particulier 60 |

| DIMENSIONS DISTRIBUTEUR SELON L'INVENTION | |
|---|---|
| Diamètre pommeau 9 (m) | 0,7 à 10 en particulier 4 |
| Nombre de fenêtres total | 4 à 16 en particulier 8 |
| Nombre de branches | 2 à 8 en particulier 4 |
| Nombre de trous 11 | 50 à 250 en particulier 80 |
| Diamètre trous 11 (mm) | 20-100 en particulier 60 |
| Longueur branche D (m) | 1,5 à 5 en particulier 2 |
| Longueur A (m) | 0,1 à 0,3 en particulier 0,2 |
| Longueur B (m) | 0,1 à 0,3 en particulier 0,2 |
| Longueur C (m) | 0,2 à 0,9 en particulier 0,6 |
| Longueur F (m) | 0,2 à 2 en particulier 0,6 |
| Longueur E (m) | 0 à 0,8 en particulier 0,6 |
| Longueur J (m) | 0,7 à 2 en particulier 1,3 |
| Longueur K(m) | 0,7 à 2 en particulier 1,3 |
| Longueur L (m) | 0,7 à 2 en particulier 1,5 |

Les figures 3 et 4 présentent le parcours de la phase légère à distribuer dans le fluide à densité plus élevée provenant du tube d'admission (1), respectivement dans le cas du dispositif selon l'art antérieur (figure 3), et dans le cas du dispositif selon l'invention (figure 4). Avec le dispositif selon l'invention, la distribution du gaz provenant du tube d'admission est meilleure avec une couverture de la majorité de l'enceinte (5). Le fluide 2 occupe environ 70% du volume au-dessus du distributeur (3) contre 27% pour le dispositif de l'art antérieur. Ainsi la phase légère est bien dispersée et interagit plus efficacement avec la phase dense ce qui améliore les performances du réacteur comparé avec le brevet de l'art antérieur.

## Revendications

1. Enceinte réactionnelle comportant un dispositif de distribution d'une phase légère au sein d'une phase lourde dans ladite enceinte réactionnelle (5) contenant la dite phase lourde à l'état fluidisé, ledit dispositif comportant une conduite (1) d'amenée de la phase légère pénétrant à l'intérieur de l'enceinte réactionnelle (5) dans sa partie inférieure, ladite conduite (1) étant cylindrique et sensiblement centrée selon l'axe de symétrie de l'enceinte réactionnelle (5), et étant ouverte dans sa partie supérieure par des premières et deuxièmes fenêtres rectangulaires (7, 8) percées dans la paroi latérale de la conduite (1), les deuxièmes fenêtres (8) se prolongeant par des branches (6) perpendiculaires à l'axe de symétrie de l'enceinte réactionnelle (5), et la conduite (1) étant surmontée à sa partie supérieure d'un pommeau convexe (9) qui présente des encoches (10) régulièrement réparties tout au long de son bord inférieur, et laisse passer les branches (6) qui débordent au-delà de la circonférence dudit pommeau (9).

2. Enceinte réactionnelle selon la revendication 1, dans laquelle les premières fenêtres (7) ont une largeur B et une hauteur J et les deuxièmes fenêtres (8) ont une largeur A et une hauteur K déterminées de telle manière que la vitesse de la phase légère au passage des premières et deuxièmes fenêtres soit comprise entre 0,3 V et 20 V, et préférentiellement comprise entre 0,5V et 10V, V désignant la vitesse de ladite phase légère dans la conduite (1).

3. Enceinte réactionnelle selon la revendication 1, dans laquelle la longueur D des branches (6) prises depuis le centre O du dispositif, coïncidant avec l'axe de symétrie de l'enceinte réactionnelle (5), jusqu'à leur extrémité de sortie est comprise entre 0,6 I et 0,95G, G désignant le diamètre intérieur de l'enceinte réactionnelle (5), et la hauteur L des branches (6) prise à leur extrémité de sortie est comprise entre 1 et 10 K, K désignant la hauteur des deuxièmes fenêtres (8).

4. Enceinte réactionnelle selon la revendication 1, dans laquelle les premières et deuxièmes fenêtres (7, 8) sont disposées de manière alternée et sont en nombre pairs, et préférentiellement sont de même nombre.

5. Enceinte réactionnelle selon la revendication 1, dans laquelle le diamètre I du pommeau (9) est compris entre 0,05 G et 0, 95 G, de préférence compris entre 0,2 G et 0,8 G, et de manière encore préférée compris entre 0,25 G et 0,75 G, G désignant le diamètre intérieur de l'enceinte réactionnelle (5).

6. Enceinte réactionnelle selon la revendication 1, dans laquelle les encoches (10) sont de forme triangulaire ou rectangulaire.

7. Enceinte réactionnelle selon la revendication 1, dans laquelle lorsque les encoches (10) sont rectangulaires, leur largeur est comprise entre 0,01F et 0,9 F, leur hauteur est comprise entre 0,01F et 0,9 F, F étant la hauteur de la partie inférieure du pommeau (9).

8. Enceinte réactionnelle selon la revendication 1, dans laquelle lorsque les encoches (10) sont triangulaires, la hauteur du triangle est comprise entre 0,01F et 0,9F et la base du triangle est comprise entre 0,01F et 0,9, F étant la hauteur de la partie inférieure du pommeau (9).

9. Enceinte réactionnelle selon la revendication 1, dans laquelle le pommeau (9) est muni d'orifices (11) sur sa clotte supérieure, lesdits orifices (11) ayant un diamètre compris entre 1 et 100 mm, préférentiellement compris entre 10 et 50 mm.

10. Procédé de craquage catalytique à deux zones de régénération utilisant l'enceinte réactionelle selon l'une des revendications 1 à 9, pour réaliser le passage du catalyseur de la première zone de régénération à la deuxième zone de régénération en lit fluidisé turbulent.

11. Procédé de traitement de la biomasse utilisant l'enceinte réactionelle selon l'une des revendications 1 à 9, pour réaliser l'introduction d'une phase gaz, ou d'une suspension gaz solide dans le milieu fluidisé.

12. Procédé d'hydrotraitement de coupes pétrolières lourdes utilisant l'enceinte réactionelle selon l'une des revendications 1 à 9, pour réaliser l'introduction de l'hydrogène dans le milieu fluidisé contenant les particules de catalyseur et la phase hydrocarbure lourde à traiter.

## Patentansprüche

1. Reaktionskammer, welche eine Vorrichtung zur Verteilung einer leichten Phase in einer schweren Phase in der Reaktionskammer (5), welche die schwere Phase im fluidisierten Zustand enthält, umfasst, wobei die Vorrichtung eine Leitung (1) zur Zuführung der leichten Phase, die ins Innere der Reaktionskammer (5) in deren unterem Teil hineinführt, umfasst, wobei die Leitung (1) zylindrisch und im Wesentlichen um die Symmetrieachse der Reaktionskammer (5) zentriert ist und in ihrem oberen Teil durch erste und zweite rechteckige Fenster (7, 8), die in der Seitenwand der Leitung (1) ausgebildet sind, offen ist, wobei die zweiten Fenster (8) durch zur Symmetrieachse der Reaktionskammer (5) senkrechte Schenkel (6) verlängert sind und die Leitung (1) an ihrem oberen Teil von einem konvexen Kopf (9) überragt wird, welcher Aussparungen (10) aufweist, die über seinen gesamten unteren Rand gleichmäßig verteilt sind, und die Schenkel (6) durchlässt, welche über den Umfang des Kopfes (9) hinausragen.

2. Reaktionskammer nach Anspruch 1, wobei die ersten Fenster (7) eine Breite B und eine Höhe J aufweisen und die zweiten Fenster (8) eine Breite A und eine Höhe K aufweisen, die so bestimmt sind, dass die Geschwindigkeit der leichten Phase beim Durchströmen der ersten und zweiten Fenster zwischen 0,3 V und 20 V beträgt und vorzugsweise zwischen 0,5 V und 10 V beträgt, wobei V die Geschwindigkeit der leichten Phase in der Leitung (1) bezeichnet.

3. Reaktionskammer nach Anspruch 1, wobei die Länge D der Schenkel (6), gemessen von der Mitte O der Vorrichtung, die mit der Symmetrieachse der Reaktionskammer (5) zusammenfällt, bis zu ihrem Austrittsende, zwischen 0,6 I und 0,95 G beträgt, wobei G den Innendurchmesser der Reaktionskammer (5) bezeichnet, und die Höhe L der Schenkel (6), gemessen an ihrem Austrittsende, zwischen 1 und 10 K beträgt, wobei K die Höhe der zweiten Fenster (8) bezeichnet.

4. Reaktionskammer nach Anspruch 1, wobei die ersten und zweiten Fenster (7, 8) abwechselnd angeordnet sind und ihre Anzahlen gerade sind und vorzugsweise gleich sind.

5. Reaktionskammer nach Anspruch 1, wobei der Durchmesser I des Kopfes (9) zwischen 0,05 G und 0,95 G, vorzugsweise zwischen 0,2 G und 0,8 G und noch stärker bevorzugt zwischen 0,25 G und 0,75 G beträgt, wobei G den Innendurchmesser der Reaktionskammer (5) bezeichnet.

6. Reaktionskammer nach Anspruch 1, wobei die Aussparungen (10) von dreieckiger oder rechteckiger Form sind.

7. Reaktionskammer nach Anspruch 1, wobei, wenn die Aussparungen (10) rechteckig sind, ihre Breite zwischen 0,01 F und 0,9 F beträgt und ihre Höhe zwischen 0,01 F und 0,9 F beträgt, wobei F die Höhe des unteren Teils des Kopfes (9) ist.

8. Reaktionskammer nach Anspruch 1, wobei, wenn die Aussparungen (10) dreieckig sind, die Höhe des Dreiecks zwischen 0,01 F und 0,9 F beträgt und die Basis des Dreiecks zwischen 0,01 F und 0,9 F beträgt, wobei F die Höhe des unteren Teils des Kopfes (9) ist.

9. Reaktionskammer nach Anspruch 1, wobei der Kopf (9) mit Öffnungen (11) auf seiner oberen Haube versehen ist, wobei die Öffnungen (11) einen Durchmesser zwischen 1 und 100 mm, vorzugsweise zwischen 10 und 50 mm aufweisen.

10. Verfahren zum katalytischen Cracken mit zwei Regenerationszonen unter Verwendung der Reaktionskammer nach einem der Ansprüche 1 bis 9, um den Durchgang des Katalysators von der ersten Regenerationszone zur zweiten Regenerationszone in einer turbulenten Wirbelschicht zu bewirken.

11. Verfahren zur Behandlung der Biomasse unter Verwendung der Reaktionskammer nach einem der Ansprüche 1 bis 9, um die Einleitung einer Gasphase oder einer Gas-Feststoff-Suspension in das fluidisierte Medium durchzuführen.

12. Verfahren zur Hydrobehandlung von schweren Erdölfraktionen unter Verwendung der Reaktionskammer nach einem der Ansprüche 1 bis 9, um die Einleitung von Wasserstoff in das fluidisierte Medium, das die Katalysatorpartikel und die zu behandelnde Phase von schweren Kohlenwasserstoffen enthält, durchzuführen.

## Claims

1. Reaction chamber comprising a device for distributing a light phase in a heavy phase inside said reaction chamber (5) containing said heavy phase in the fluidized state, said device comprising a pipe (1) for conveying the light phase entering the reaction chamber (5) in its lower part, said pipe (1) being cylindrical and substantially centred along the axis of symmetry of the reaction chamber (5), and being open in its upper part via first and second rectangular openings (7, 8) pierced in the lateral wall of said pipe (1), the second openings (8) being extended by branches (6) perpendicular to the axis of symmetry of the reaction chamber (5), and the pipe (1) being surmounted at its upper part by a convex head (9) which has notches (10) uniformly distributed all along its lower edge, and allows the passage of the branches (6) which protrude beyond the circumference of said head (9).

2. Reaction chamber according to Claim 1, wherein the first openings (7) have a width B and a height J, and the second openings (8) have a width A and a height K, which are determined in such a way that the velocity of the light phase as it passes through the first and second openings is comprised between 0.3V and 20V, and preferably comprised between 0.5V and 10V, V denoting the velocity of said light phase in the pipe (1).

3. Reaction chamber according to Claim 1, wherein the length D of the branches (6), measured from the centre O of the device, which coincides with the axis of symmetry of the reaction chamber (5), as far as their outlet end, is comprised between 0.6I and 0.95G, G denoting the inside diameter of the reaction chamber (5), and the height L of the branches (6) at their outlet end is comprised between 1 and 10K, K denoting the height of the second openings (8).

4. Reaction chamber according to Claim 1, wherein the first and second openings (7, 8) are arranged in alternation and in even numbers, there preferably being the same number of each.

5. Reaction chamber according to Claim 1, wherein the diameter I of the head (9) is comprised between 0.05G and 0.95G, preferably comprised between 0.2G and 0.8G, and more preferably still, comprised between 0.25G and 0.75G, G denoting the inside diameter of the reaction chamber (5).

6. Reaction chamber according to Claim 1, wherein the notches (10) are of triangular or rectangular shape.

7. Reaction chamber according to Claim 1, wherein, when the notches (10) are rectangular, their width is comprised between 0.01 F and 0.9F, their height is comprised between 0.01 F and 0.9F, F being the height of the lower part of the head (9).

8. Reaction chamber according to Claim 1, wherein, when the notches (10) are triangular, the height of the triangle is comprised between 0.01F and 0.9F, and the base of the triangle is comprised between 0.01F and 0.9F, F being the height of the lower part of the head (9).

9. Reaction chamber according to Claim 1, wherein the head (9) is provided with orifices (11) over its upper dome, said orifices (11) having a diameter of between 1 and 100 mm, preferably between 10 and 50 mm.

10. Process for catalytic cracking with two regeneration regions, using the reaction chamber according to one of Claims 1 to 9 to transfer the catalyst from the first regeneration region to the second, turbulent fluidized bed regeneration region.

11. Process for processing biomass, using the reaction chamber according to one of Claims 1 to 9 to introduce a gas phase, or a gas-solid suspension, into the fluidized medium.

12. Process for the hydrotreatment of heavy petroleum fractions using the reaction chamber according to one of Claims 1 to 9 to introduce hydrogen into the fluidized medium containing the catalyst particles and the heavy hydrocarbon phase that is to be processed.
